(19) Europäisches Patentamt / European Patent Office / Office européen des brevets

(11) **EP 3 982 188 B1**

(12) **FASCICULE DE BREVET EUROPEEN**

(45) Date de publication et mention
de la délivrance du brevet:
**30.04.2025 Bulletin 2025/18**

(21) Numéro de dépôt: **21200912.0**

(22) Date de dépôt: **05.10.2021**

(51) Classification Internationale des Brevets (IPC):
**G02B 27/01** *(2006.01)* **G02B 27/00** *(2006.01)*

(52) Classification Coopérative des Brevets (CPC):
**G02B 27/0093; G02B 27/017; G02B 27/0172**

(54) **SYSTÈME DE VISION EN RÉALITÉ VIRTUELLE OU AUGMENTÉE AVEC CAPTEUR D'IMAGE DE L' OEIL**

VIRTUAL-REALITY- ODER AUGMENTED-REALITY-SICHTSYSTEM MIT BILDSENSOR DES AUGES

SYSTEM FOR VIEWING IN VIRTUAL OR AUGMENTED REALITY WITH EYE IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2020 FR 2010327**

(43) Date de publication de la demande:
**13.04.2022 Bulletin 2022/15**

(73) Titulaire: **Commissariat à l'Energie Atomique et aux Energies Alternatives
75015 Paris (FR)**

(72) Inventeur: **MAINGUET, Jean-François
38054 GRENOBLE (FR)**

(74) Mandataire: **Brevalex
Tour Trinity
1 B Place de la Défense
92400 Courbevoie (FR)**

(56) Documents cités:
**US-A1- 2016 370 591 US-A1- 2019 056 599
US-A1- 2020 260 057 US-B1- 10 698 204**

## Description

### Domaine technique

La réalité virtuelle désigne une technologie qui place un utilisateur dans un environnement artificiellement généré et dans lequel l'utilisateur peut interagir à l'aide de logiciels.

La réalité augmentée désigne une technologie qui superpose la réalité et des éléments d'affichage générés par des logiciels.

L'invention concerne le domaine des systèmes de vision en réalité virtuelle ou en réalité augmentée.

### Etat de la technique antérieure

On connaît dans l'art antérieur un système de vision en réalité virtuelle ou augmentée, tel que décrit dans la demande de brevet FR3086399. Dans un tel système, une image est générée au niveau d'une matrice d'éléments d'émission lumineuse, et projetée vers l'œil de l'utilisateur par l'intermédiaire d'un système optique de projection. Le système comporte en outre une matrice de photo-détecteurs, avec la matrice d'éléments d'émission lumineuse et la matrice de photo-détecteurs au moins partiellement entrelacées ensemble. On peut ainsi acquérir aisément une image de l'œil, en particulier une image de la rétine.

Le brevet US10698204 divulgue un système d'affichage monté sur la tête, ayant des sources lumineuses LED qui émettent de la lumière rouge, verte, bleue, et infrarouge, une pluralité de miroirs pivotantes DMD source d'image qui réfléchissent de la lumière vers l'œil d'un utilisateur. La lumière réfléchie par l'œil est réfléchie vers une caméra par une lame semi-réfléchissante.

La demande de brevet US10698204 divulgue un système d'affichage monté sur la tête, une source lumineuse qui émet de la lumière infrarouge, un substrat solide ayant une pluralité de miroirs immobiles et courbes, qui réfléchissent la lumière infrarouge émise par la source vers l'œil d'un utilisateur, et récupèrent la lumière réfléchie par cet œil pour la réfléchir vers une caméra. Ce substrat est positionné devant une électronique d'affichage.

Une idée à la base de l'invention consiste à améliorer un tel système.

### EXPOSÉ DE L'INVENTION

Cet objectif est atteint avec un système de vision en réalité virtuelle ou en réalité augmentée selon les revendications.

Par « sensiblement parallèle à l'axe d'intérêt », on entend « incliné d'un angle inférieur ou égal à 10° relativement à l'axe d'intérêt ».

En utilisation, l'axe d'intérêt est avantageusement confondu avec l'axe de visée d'un œil d'un utilisateur regardant droit devant lui. En variante, un élément de déport de lumière tel qu'un guide d'onde planaire permet de dévier la lumière se propageant parallèle à l'axe d'intérêt, pour l'aligner avec l'axe de visée (et inversement).

Chaque micro-miroir de la matrice de micro-miroirs est donc configuré pour, dans sa première position, recevoir de la lumière en provenance du premier module d'émission et dévier vers l'œil une partie au moins de cette lumière (directement ou par l'intermédiaire d'un élément de déport de lumière tel que mentionné ci-dessus). De même, chaque micro-miroir de la matrice de micro-miroirs est configuré pour, dans sa seconde position, recevoir de la lumière en provenance du second module d'émission et dévier vers l'œil une partie au moins de cette lumière, et recevoir de la lumière renvoyée par l'œil et dévier cette lumière vers le module de photo-détection (directement ou par l'intermédiaire d'un élément de déport de lumière tel que mentionné ci-dessus).

Les première et seconde positions de chaque micro-miroirs se distinguent chacune d'une position de repos, prise par le micro-miroir en l'absence de toute sollicitation externe notamment par un signal électrique.

Le premier module d'émission permet, avec la matrice de micro-miroirs, de générer des images pixellisées destinées à être projetées vers l'œil de l'utilisateur. Le second module d'émission permet d'éclairer l'œil, suffisamment pour permettre d'acquérir une bonne image de l'œil, et à une longueur d'onde qui ne gêne pas l'utilisateur. Le module de photo-détection permet d'acquérir une image de l'œil. La matrice de micro-miroirs participe à la formation d'image pixellisées. Elle permet en outre de dévier vers l'œil la lumière infrarouge émise par le second module d'émission, et de dévier vers le module de photo-détection la lumière infrarouge renvoyée par l'œil.

Comme dans le premier document de 'art antérieur décrit en introduction, l'invention permet à la fois de projeter vers l'œil une image virtuelle générée à l'aide d'un dispositif de type émissif, et d'acquérir une image de l'œil. L'invention se distingue cependant de cet art antérieur en ce que l'image virtuelle projetée vers l'œil est formée à l'aide d'une matrice de micro-miroirs. L'une des idées à la base de l'invention consiste à utiliser une matrice de micro-miroirs dans laquelle chaque micro-miroir peut prendre deux positions distinctes d'une position de repos, et à exploiter chacune de ces deux positions. Ainsi, chaque micro-miroir de la matrice de micro-miroirs peut alterner entre une position dans laquelle il envoie de la lumière visible vers l'œil, pour la projection vers l'œil d'une image virtuelle, et une position dans laquelle il envoie de la lumière infrarouge vers l'œil puis dévie en direction d'un module de photo-détection la lumière infrarouge renvoyée par l'œil. Il est ainsi possible d'utiliser uniquement des composants courants dans le commerce, là où l'art antérieur décrit en introduction impliquait de développer un dispositif spécifique avec des photo-détecteurs et des diodes électroluminescentes entrelacées ensemble.

On peut remarquer qu'il n'était absolument pas évident, pour l'homme du métier, d'avoir l'idée d'exploiter les deux positions des micro-miroirs. Classiquement, une matrice de micro-miroirs est utilisée pour générer une image pixellisée, avec pour chaque micro-miroir une position dite d'éclairage qui correspond à un pixel allumé sur l'image, et une position dite d'extinction qui correspond à un pixel éteint sur l'image. Dans la position d'éclairage, le micro-miroir dévie la lumière vers l'œil. Dans la position d'extinction, le micro-miroir dévie la lumière dans une direction non utile, où peut se trouver un absorbeur de lumière. La solution la plus évidente, pour ajouter une fonction d'acquisition d'image, consiste à ajouter une ou plusieurs photodiodes en face de l'œil, entre les micro-miroirs. Le second module d'émission, pour l'éclairage infrarouge, peut être positionné également en face de l'œil. En variante, le second module d'émission peut être positionné à proximité du premier module d'émission. Dans la position d'éclairage, un micro-miroir dévie alors vers l'œil de la lumière visible ou de la lumière infrarouge, selon que le premier ou le second dispositif d'émission est allumé. Pour éviter d'éblouir les photodiodes, on comprend qu'il est important de positionner ces dernières « à l'ombre », c'est-à-dire en des emplacements où elles ne peuvent pas recevoir la lumière provenant directement du second module d'émission. Dans un cas simple, le système comporte une matrice de photodiodes, et l'œil est éclairé dans l'infrarouge de manière uniforme, avec tous les micro-miroirs dans la position d'éclairage. Il suffit alors que les photodiodes soient à l'ombre lorsque tous les micro-miroirs sont dans la position d'éclairage. Dans un cas particulier, le système comporte une unique photodiode, de grande étendue. Dans ce cas, on peut recomposer une image de l'œil en l'éclairant par un éclairage structuré. Cet éclairage structuré est défini à l'aide de la matrice de micro-miroirs dans laquelle une partie des micro-miroirs se trouve dans la position d'éclairage et une partie des micro-miroirs se trouve dans la position d'extinction. Dans ce cas, il faut que chaque région de l'unique photodiode soit à l'ombre, pour les deux positions possibles de chacun des micro-miroirs. Une astuce pour placer les photodiodes (ou les régions de l'unique photodiode) à l'ombre, consiste à positionner ces dernières au fond d'un trou étroit creusé dans un substrat, avec les parois du trou qui absorbent la lumière infrarouge.

Une autre solution évidente, pour ajouter une fonction d'acquisition d'image à un système optique de vision en réalité virtuelle ou augmentée basé sur l'utilisation d'une matrice de micro-miroir, consiste à placer la source infrarouge et le module de photo-détection dans l'alignement du premier module d'émission. Cela nécessite cependant l'utilisation de miroirs dichroïques, à l'origine de pertes optiques importantes, afin d'émettre la lumière infrarouge dans l'alignement de la lumière visible et de diriger la lumière infrarouge réfléchie vers le module de photo-détection.

De préférence, pour chacun des micro-miroirs de la matrice de micro-miroirs, la première position et la seconde position sont symétriques l'une de l'autre relativement à un plan de symétrie élémentaire, avec les plans de symétrie élémentaires associés à chacun des micro-miroirs qui sont tous parallèles entre eux.

Avantageusement, le système selon l'invention comporte en outre un système optique de projection, situé en aval de la matrice de micro-miroirs selon un sens de propagation du faisceau de lumière visible dans le système de vision en réalité virtuelle ou en réalité augmentée, et apte à réaliser une conjugaison optique entre la matrice de micro-miroirs et une surface de mise au point prédéterminée.

Le système optique de projection est de préférence un système optique à focale variable, relié à un premier dispositif de pilotage pour le pilotage de la longueur focale dudit système optique de projection.

De préférence, le système selon l'invention comporte en outre un système optique de réglage, disposé entre la matrice de micro-miroirs et le module de photo-détection, et configuré pour participer à une conjugaison optique entre une surface destinée à recevoir l'œil d'un utilisateur et une surface de détection du module de photo-détection.

De préférence, une profondeur de champ du système optique de réglage est adaptée pour permettre de former, sur la surface de détection du module de photo-détection, une image nette d'une surface passant en utilisation par l'œil de l'utilisateur, pour toute valeur de la longueur focale du système optique de projection appartenant à un intervalle déterminé de longueurs focales, avec ledit intervalle de longueurs focale qui présente une étendue comprise entre trois millimètres et cinq centimètres.

Un axe optique du dispositif de photo-détection et le second axe d'émission peuvent être sensiblement parallèles, à plus ou moins 10° près.

Le système selon l'invention peut comporter au moins un miroir partiellement réfléchissant, configuré pour dévier un axe optique du dispositif de photo-détection ou le second axe d'émission, de manière à superposer ensemble ces derniers.

Le système selon l'invention peut comporter en outre un calculateur, configuré pour recevoir en entrée au moins une image infrarouge acquise par le module de photo-détection, et pour mettre en œuvre un traitement de cette au moins une image infrarouge de manière à en déduire un ou plusieurs paramètre(s) relatif(s) à l'utilisateur.

Avantageusement, le premier module d'émission lumineuse est apte à émettre un faisceau de lumière visible, de spectre centré alternativement sur une première, une deuxième et une troisième longueur d'onde.

Le premier module d'émission lumineuse peut comporter au moins trois sources élémentaires, adaptées respectivement à émettre un faisceau lumineux rouge, bleu et vert.

L'invention couvre également un premier procédé d'utilisation d'un système selon l'invention dans lequel le premier module d'émission lumineuse est apte à émettre un faisceau de lumière visible, de spectre centré alternativement sur une première, une deuxième et une troisième longueur d'onde. Ce procédé comporte les étapes suivantes :

a) pilotage du premier module d'émission, pour l'émission d'un faisceau de lumière visible avec un spectre centré sur la première longueur d'onde, et pilotage des miroirs de la matrice de micro-miroir de manière à former l'une première composante d'une image en couleurs ;

b) pilotage du premier module d'émission, pour l'émission d'un faisceau de lumière visible avec un spectre centré sur la deuxième longueur d'onde, et pilotage des miroirs de la matrice de micro-miroir de manière à former l'une seconde composante de l'image en couleurs ;

c) pilotage du premier module d'émission, pour l'émission d'un faisceau de lumière visible avec un spectre centré sur la troisième longueur d'onde, et pilotage des miroirs de la matrice de micro-miroir de manière à former l'une troisième composante de l'image en couleurs ; et

d) pilotage du premier module d'émission lumineuse pour arrêter l'émission du faisceau de lumière visible, pilotage du second module d'émission pour l'émission d'un faisceau de lumière infrarouge, pilotage de la matrice de micro-miroirs pour que l'un au moins des micro-miroirs se trouve dans la seconde position, et acquisition par le module de photo-détection d'une image infrarouge d'une région d'un œil de l'utilisateur.

Avantageusement, à l'étape d), tous les micro-miroirs de la matrice de micro-miroir sont positionnés dans leur seconde position.

En variante, le module de photo-détection comporte une unique photodiode, et à l'étape d), seulement certains des micro-miroirs de la matrice de micro-miroir sont positionnés dans leur seconde position.

L'invention couvre enfin un deuxième procédé d'utilisation d'un système selon l'invention dans lequel le premier module d'émission lumineuse est apte à émettre un faisceau de lumière visible, de spectre centré alternativement sur une première, une deuxième et une troisième longueur d'onde. Ce procédé comporte les étapes suivantes :

a) pilotage du premier module d'émission, pour l'émission d'un faisceau de lumière visible avec un spectre centré sur la première longueur d'onde, et pilotage des miroirs de la matrice de micro-miroir de manière à former l'une première composante d'une image en couleurs ;

b) pilotage du premier module d'émission, pour l'émission d'un faisceau de lumière visible avec un spectre centré sur la deuxième longueur d'onde, et pilotage des miroirs de la matrice de micro-miroir de manière à former l'une seconde composante de l'image en couleurs ; et

c) pilotage du premier module d'émission, pour l'émission d'un faisceau de lumière visible avec un spectre centré sur la troisième longueur d'onde, et pilotage des miroirs de la matrice de micro-miroir de manière à former l'une troisième composante de l'image en couleurs ;

où, durant toute la durée au moins des étapes a) à c), le second module d'émission émet de la lumière et le module de photo-détection reçoit de la lumière et intègre un signal.

**Brève description des figures**

La présente invention sera mieux comprise à la lecture de la description d'exemples de réalisation donnés à titre purement indicatif et nullement limitatif, en faisant référence aux dessins annexés sur lesquels :

- la figure 1 illustre de façon schématique, une vue en utilisation d'un système selon un premier mode de réalisation de l'invention ;
- les figures 2A à 2C illustrent de façon schématique un deuxième mode de réalisation de système selon l'invention, dans une vue en coupe ;
- les figures 3A et 3B illustrent de façon schématique une matrice de micro-miroir dans un système selon l'invention, respectivement selon une vue de dessus et selon une vue en coupe ;
- les figures 4A et 4B illustrent de façon schématique la matrice de micro-miroirs des figures 3A et 3B, dans deux configurations respectives de cette dernière ;
- la figure 5 illustre de façon schématique un troisième mode de réalisation de système selon l'invention, dans une vue en coupe ;
- les figures 6A et 6B illustrent de façon schématique deux variantes d'un quatrième mode de réalisation de système selon l'invention, dans une vue en coupe ;

- les figures 7A à 7D illustrent de façon schématique différentes variantes du mode de réalisation de la figure 2A.

**Description des modes de réalisation**

Pour plus de clarté, on a représenté sur les figures les axes (Ox), (Oy) et/ou (Oz) d'un repère orthonormé.

Pour faciliter la compréhension de l'invention, on a représenté sur certaines figures un œil 10 d'un utilisateur, tel qu'il se positionne relativement au système selon l'invention, en utilisation. L'œil n'appartient pas au système selon l'invention.

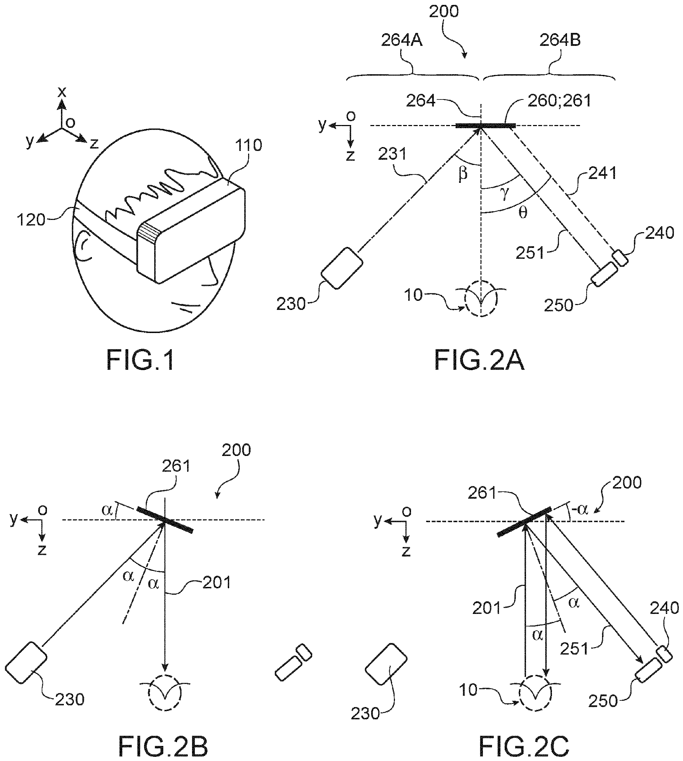

La figure 1 illustre de manière schématique une vue en utilisation d'un système de vision en réalité virtuelle selon l'invention. Le système n'est pas visible, car logé à l'intérieur d'un support 110 destiné à être monté sur la tête d'un utilisateur. Dans l'exemple de la figure 1, ce support 110 prend la forme d'un masque. En utilisation, le masque 110 est maintenu contre le visage de l'utilisateur, en recouvrant ses yeux, à l'aide d'une sangle 120 montée solidaire du masque 110 et passant derrière la tête de l'utilisateur. En variante, le système selon l'invention peut être intégré dans un support de type lunette, casque, ou tout autre support destiné à être monté sur la tête d'un utilisateur.

La figure 2A illustre de façon schématique, et dans une vue en coupe dans un plan (yOz), un système 200 selon un deuxième mode de réalisation de l'invention.

Le système 200 comporte :

- un premier module d'émission, 230, apte à émettre de la lumière à des longueurs d'onde appartenant au spectre visible ;
- un second module d'émission, 240, apte à émettre de la lumière à des longueurs d'onde appartenant au spectre infrarouge ;
- un module de photo-détection 250, sensible dans l'infrarouge, à des longueurs d'onde appartenant au spectre de la lumière émise par le second module d'émission 240 ; et
- une matrice de micro-miroirs 260.

Le premier module d'émission 230 est configuré pour émettre au moins un faisceau de lumière collimaté, selon un premier axe d'émission 231. Il comporte ici une pluralité de sources élémentaires, non représentées, adaptées chacune à émettre un faisceau monochromatique centré sur une valeur différente de longueur d'onde. Chaque source élémentaire peut être constituée par une diode électroluminescente respective. Le premier module d'émission 230 comporte avantageusement trois sources élémentaires, adaptées à émettre respectivement dans le rouge, le bleu et le vert, afin de former les trois composantes d'une image en couleurs visible par l'utilisateur. Le spectre visible désigne une plage de longueurs d'onde allant de 400 nm à 700 nm. Une émission dans le bleu désigne une émission de lumière avec un spectre en longueur d'onde qui présente un unique pic dans le visible, centré sur une longueur appartenant à la plage de longueurs d'onde allant de 400 nm à 480 nm. De manière similaire, une émission dans le vert est associée à la plage de longueurs d'onde allant de 500 nm à 560 nm. De manière similaire, une émission dans le rouge est associée à la plage de longueurs d'onde allant de 600 nm à 700 nm.

Le second module d'émission 240 est configuré pour émettre au moins un faisceau de lumière collimaté, selon un second axe d'émission 241. Il comporte de préférence une unique source lumineuse, notamment une diode électroluminescente, non représentée. Le second module d'émission 240 est destiné à émettre de la lumière à des longueurs d'onde situées en dehors du spectre visible, pour éclairer l'œil sans gêner l'utilisateur. En pratique, ces longueurs d'onde s'étendent dans l'infrarouge, préférentiellement dans le proche infrarouge. Le spectre infrarouge désigne une plage de longueurs d'onde allant de 700 nm à 50 $\mu$m. Le proche infrarouge désigne une plage de longueurs d'onde allant de allant de 700 nm à 3 $\mu$m. Le second module d'émission peut comporter un filtre fréquentiel, pour bloquer des longueurs d'onde émises par la diode électroluminescente et appartenant au spectre visible. Le filtre fréquentiel peut être monté amovible, de manière à pouvoir être retiré par exemple lors d'une phase préliminaire de réglage du système.

Le module de photo-détection 250 comporte au moins un photo-détecteur sensible dans l'infrarouge, par exemple de type photodiode. L'au moins un photo-détecteur est sensible, plus particulièrement, à des longueurs d'onde appartenant au spectre d'émission du second module d'émission 240. L'au moins un photo-détecteur peut être constitué d'un unique photo-détecteur, de grande étendue. Plus préférentiellement, il peut être constitué d'une matrice de photo-détecteurs agencés par exemple selon des lignes et des colonnes. Le module de photo-détection présente un axe optique 251, qui s'étend orthogonal au plan de l'unique photo-détecteur, respectivement orthogonal au plan de la matrice de photo-détecteurs.

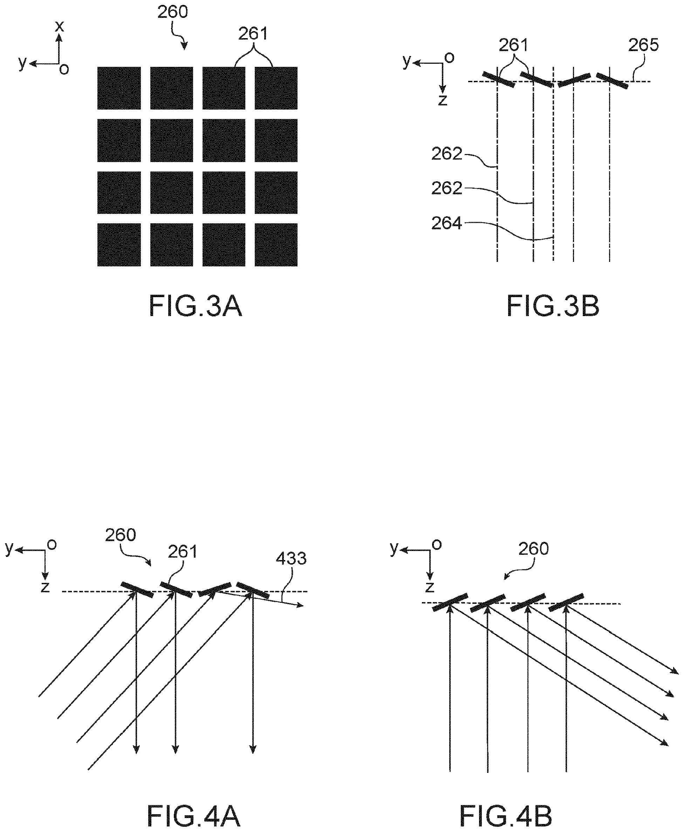

La matrice de micro-miroirs 260 est illustrée plus en détails aux figures 3A et 3B. La figure 3A représente schématiquement la matrice de micro-miroirs 260, selon une vue de dessus dans un plan (xOy). La figure 3B est une vue en coupe de la matrice de micro-miroirs 260, dans un plan (yOz). La matrice de micro-miroirs 260 comporte une pluralité de micro-miroirs 261, agencés par exemple en lignes et colonnes.

Chaque micro-miroir 261 est monté sur un support mobile en rotation, non représenté, et chacun desdits supports mobiles peut être piloté individuellement. En l'absence de toute sollicitation externe des supports mobiles, les micro-miroirs sont dans une position dite de repos, et s'étendent tous dans un même plan de repos 265, par exemple parallèle au plan (xOy). Ici, pour simplifier les figures, chaque micro-miroir 261 est monté mobile en rotation autour d'un axe parallèle à l'axe (Ox). L'invention n'est cependant pas limitée à ce cas particulier, et couvre notamment des modes de réalisation dans lesquels l'axe de rotation des micro-miroirs n'est pas parallèle au plan de leur position de repos.

Chaque micro-miroir 261 peut prendre deux positions. L'une première position correspond ici à une rotation d'un angle R1 autour de son axe de rotation (ici un axe parallèle à l'axe (Ox)), depuis la position de repos (et dans le sens horaire). L'une seconde position correspond à une rotation d'un angle R2 autour de son axe de rotation (ici un axe parallèle à l'axe (Ox)), depuis la position de repos (et dans le sens horaire). Dans l'exemple représenté, l'axe de rotation d'un micro-miroir 261 passe par le centre de ce dernier. En variante, l'axe de rotation d'un micro-miroir 261 peut être déporté sous ce dernier.

Ainsi la première et la deuxième position sont distinctes l'une de l'autre.

A la figure 3B, trois micro-miroirs 261 prennent la première position, et un micro-miroir 261 prend la seconde position. En tout état de cause, les micro-miroirs 261 de la matrice de micro-miroirs sont tous parallèles entre eux lorsqu'ils sont tous dans leur première position, respectivement lorsqu'ils sont tous dans leur seconde position. Ici, mais de manière non limitatives, les deux positions de chaque micro-miroir 261 sont symétriques l'une de l'autre relativement à un plan de symétrie élémentaire 262 associé audit micro-miroir 261. Dit autrement, l'angle (orienté) R1 prend une valeur +$\alpha$ tandis que l'angle (orienté) R2 prend une valeur-$\alpha$. Pour chaque micro-miroir 261, le plan de symétrie élémentaire 262 correspondant est orthogonal au plan de repos 265. Les plans de symétrie élémentaires 262 associés à chacun des micro-miroirs 261 de la matrice de micro-miroirs sont tous parallèles entre eux, et parallèles à un même plan médian 264 passant par le centre de la matrice de micro-miroirs 260. Ici, le plan médian 264 et les plans de symétrie élémentaires 262 sont parallèles au plan (xOz). Le plan médian 264 désigne un plan passant par le centre de la matrice de micro-miroirs 260, et orthogonal au plan de repos 265.

Sur la figure 3A, on a représenté une matrice de micro-miroirs à 16 micro-miroirs. En pratique, la matrice de micro-miroir 260 comporte généralement plus de dix mille micro-miroirs, par exemple 2 millions. Chaque micro-miroir 261 présente un diamètre de l'ordre de quelques microns, par exemple entre 3 $\mu$m et 10 $\mu$m, et peut avoir une forme quelconque (de préférence optimisée pour maximiser la surface cumulée occupée par les micro-miroirs dans la matrice de micro-miroirs).

Pour des raisons de lisibilité, les figures 2A à 2C ne montrent qu'un seul micro-miroir 261 de la matrice de micro-miroirs 260. A la figure 2A, ce micro-miroir 261 est représenté dans la position dite de repos, dans un plan parallèle au plan (xOy).

Le plan médian 264 définit deux demi-espaces 264A et 264B. Dans l'exemple représenté ici, le premier module d'émission 230 s'étend dans l'un premier parmi ces deux demi-espaces, 264A, tandis que le second module d'émission 250 et le module de photo-détection 240 s'étendent dans l'un second parmi ces deux demi-espaces, 264B.

Le premier axe d'émission 231, associé au premier module d'émission 230, s'étend dans le premier demi-espace 264A. Le premier axe d'émission 231 est incliné d'un angle $\beta$ relativement au plan médian 264.

L'axe optique 251 du module de photo-détection 250 s'étend dans le second demi-espace 264B. L'axe optique 251 est incliné d'un angle $\gamma$ relativement au plan médian 264.

Ici, du fait de la symétrie des première et seconde positions de chacun des micro-miroirs, les angles $\beta$ et $\gamma$ vérifient :

$$|\beta| = -|\gamma| \qquad\qquad (1)$$

Dit autrement, l'axe optique 251 du module de photo-détection et le premier axe d'émission 231 sont symétriques l'un de l'autres relativement au plan médian 264.

Le second axe d'émission 241, associé au second module d'émission 240, s'étend dans le second demi-espace 264B. Le second axe d'émission 241 est incliné d'un angle $\theta$ relativement au plan médian 264.

Ici, mais de manière non limitative, les angles $\theta$ et $\gamma$ vérifient :

$$|\theta| = |\gamma| \qquad\qquad (2)$$

La figure 2B illustre le système 200, pour la première position du micro-miroir 261. Dans cette première position, le micro-miroir 261 est tourné ici d'un angle R1=$\alpha$ autour de son axe de rotation, à partir de sa position de repos. On a par exemple $\alpha$=17°, ou $\alpha$=15°, ou $\alpha$=12°. Dans cette première position, le micro-miroir 261 reçoit la lumière émise par le premier module d'émission 230, et réfléchit cette lumière pour l'amener à se propager selon un axe parallèle à l'axe d'intérêt 201. L'axe d'intérêt 201 s'étend ici parallèle à l'axe (Oz). En utilisation, l'axe d'intérêt 201 est confondu avec l'axe de visée de l'œil lorsque l'utilisateur regarde droit devant lui. Dans des variantes non représentées, l'axe d'intérêt n'est pas confondu avec l'axe de visée de l'œil, et un élément de déport de lumière tel qu'un guide d'onde planaire permet d'amener selon l'axe de visée la lumière se propageant selon l'axe d'intérêt, et inversement.

Par construction, les angles $\alpha$ et $\beta$ vérifient :

$$|\beta| = 2 * |\alpha| \qquad (3)$$

La figure 2C illustre le système 200, pour la seconde position du micro-miroir 261. Dans cette seconde position, le micro-miroir 261 est tourné d'un angle R2 autour de son axe de rotation, à partir de sa position de repos. On a ici R2=-$\alpha$. Dans cette seconde position, le micro-miroir 261 reçoit la lumière infrarouge émise par le second module d'émission 240, et réfléchit cette lumière infrarouge pour l'amener à se propager parallèlement à l'axe d'intérêt 201. Dans cette seconde position, le micro-miroir 261 ne renvoie pas vers l'œil de l'utilisateur, selon l'axe 201, la lumière émise par le premier module d'émission 230.

$$|\gamma| = 2 * |\alpha| \qquad (4)$$

Une partie au moins de la lumière infrarouge incidente sur l'œil 10 est réfléchie sur une surface appartenant à l'œil, par exemple la rétine. Cette lumière est renvoyée vers le micro-miroir 261, sur lequel elle est réfléchie en direction du module de photo-détection 250. La lumière infrarouge réfléchie en direction du module de photo-détection 250 arrive ainsi sur le module de photo-détection, permettant à ce dernier d'acquérir une image d'une région de l'œil 10, par exemple une image d'une partie au moins de la rétine. La lumière infrarouge renvoyée par l'œil se propage parallèle à l'axe d'intérêt 201. Elle est donc réfléchie, sur le micro-miroir 261, dans une direction écartée d'un angle égal à 2*$\alpha$ relativement à cet axe. Ainsi, la lumière infrarouge renvoyée par l'œil et réfléchie sur le micro-miroir 261 se propage parallèle à l'axe optique 251 du module de photo-détection 250.

On a décrit ici une situation idéale, avec des alignements parfaits. En pratique, on peut éventuellement tolérer des écarts d'angle de quelques degrés aux équations (1) et (2). Un écart angulaire entre le premier axe d'émission 231, et le symétrique de l'axe optique 251 du module de photo-détection relativement au plan médian 264, est de préférence inférieur ou égal à 10°, voire 5°, voire même 2° en valeur absolue. De même, un écart angulaire entre l'axe optique 251 du module de photo-détection et le second axe d'émission 241 est de préférence inférieur ou égal à 10°, voire 5°, voire même 2° en valeur absolue.

On a décrit ici une situation simplifiée, avec une symétrie entre les deux positions des micro-miroirs. L'homme du métier pourra aisément adapter l'enseignement ci-dessus au cas dans lequel ces deux positions ne sont pas symétriques l'une de l'autre.

On a décrit ici un cas simple, dans lequel le premier module d'émission d'une part, et le second module d'émission et le module de photo-détection d'autre part, s'étendent de part et d'autre du plan médian 264. En variante, on peut déporter l'un ou l'autre de ces éléments, mais conserver les conditions mentionnées aux équations (1) et (2) grâce à au moins une fibre optique de déport.

Aux figures 2A à 2C, on n'a montré qu'un seul micro-miroir 261 de la matrice de micro-miroirs 260. Les figures 4A et 4B montrent la matrice de micro-miroirs 260, dans deux configurations distinctes de cette dernière, en fonctionnement.

En fonctionnement, chacun des micro-miroirs 261 de la matrice de micro-miroirs prend l'une ou l'autre parmi les deux positions illustrées aux figures 2B et 2C.

A la figure 4A, le premier module d'émission envoie de la lumière vers la matrice de micro-miroirs 260. Chacun des micro-miroirs 261 prend la première position, illustrée à la figure 2B, ou la seconde position, illustrée à la figure 2C. Au niveau des micro-miroirs 261 prenant la première position, la lumière provenant du premier module d'émission est déviée selon un axe parallèle à l'axe d'intérêt (vers l'œil). Au niveau des micro-miroirs 261 prenant la seconde position, la lumière provenant du premier module d'émission est déviée dans une direction fortement écartée de l'axe d'intérêt (voir rayon 433). Le positionnement des micro-miroirs 261, chacun dans l'une ou l'autre parmi la première et la seconde position, définit une image pixellisée. Un micro-miroir 261 dans la première position définit un pixel allumé de cette image, tandis qu'un micro-miroir 261 dans la seconde position définit un pixel éteint de cette image (dans la couleur émise à ce moment-là par le premier module d'émission). Un absorbeur (non représenté) peut être placé pour absorber la lumière prenant du premier module d'émission et déviée par les micro-miroirs lorsqu'ils prennent la seconde position.

A la figure 4B, le second module d'émission envoie de la lumière vers la matrice de micro-miroirs 260. L'un au moins des micro-miroirs 261 prend la seconde position. Au niveau des micro-miroirs 261 prenant la seconde position, la lumière provenant du second module d'émission est déviée selon un axe parallèle à l'axe d'intérêt (vers l'œil), et la lumière provenant de l'œil (se propageant sensiblement parallèle à l'axe d'intérêt) est déviée vers le module de photo-détection. Au niveau d'éventuels micro-miroirs 261 qui prendraient la première position, la lumière provenant du second module d'émission est déviée dans une direction fortement écartée de l'axe d'intérêt, où peut se trouver un absorbeur (non représenté). A la figure 4B, tous les micro-miroirs 261 de la matrice de micro-miroirs prennent la seconde position, ce qui correspond à un éclairage uniforme dans l'infrarouge. Dans une variante non représentée, certains des micro-miroirs 261 prennent la première position et d'autres la seconde position.

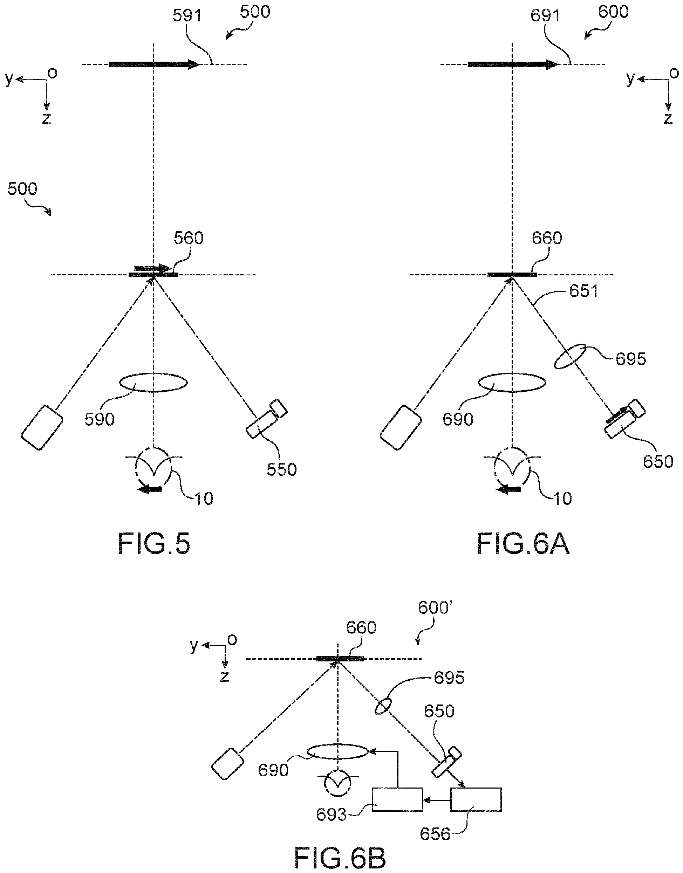

La figure 5 illustre de façon schématique un troisième mode de réalisation de système 500 selon l'invention, dans une vue en coupe. Le système 500 de la figure 5 ne sera décrit que pour ses différences relativement au système des figures 2A à 2C.

Le système 500 comporte un système optique de projection 590, constitué d'une ou plusieurs lentilles. En utilisation, le système optique de projection 590 s'étend entre l'œil 10 et la matrice de micro-miroirs 560. Dit autrement, le système optique de projection 590 s'étend en aval de la matrice de micro-miroirs 560, dans le sens de propagation de la lumière en provenance du premier module d'émission 530 lorsque les micro-miroirs sont dans leur première position. Avantageusement, la vergence du système optique de projection 590 est d'environ 20 $\delta$. Le système optique de projection 590 est apte à réaliser la conjugaison optique entre une surface de mise au point 591, située en utilisation à distance de l'œil, et la matrice de micro-miroirs 560.

En utilisation, et lorsque l'œil 10 est au repos (n'accommode pas), la surface de mise au point 591 est optiquement conjuguée avec une surface passant par la rétine de l'œil 10, en particulier une surface passant par la fovéa. En d'autres termes, l'œil 10 au repos voit nets les objets situés sur la surface de mise au point 591. La conjugaison optique entre la surface de mise au point 591 et la surface passant par la rétine est réalisée par un système optique formé par les éléments de l'œil entre la rétine et la cornée, et le cas échéant une optique de correction de la vue telle qu'une lentille de contact. Pour un œil emmétrope, la surface de mise au point 591 s'étend à l'infini. En tout état de cause, la surface de mise au point 591 s'étend du côté de la matrice de micro-miroirs 560 opposé au système optique de projection 590, généralement à plusieurs mètres de celle-ci selon l'axe (Oz).

Grâce au système optique de projection 590, la surface de mise au point 591 est optiquement conjuguée avec la matrice de micro-miroirs 560. Le système optique de projection 590 participe ainsi à la conjugaison optique entre une surface passant par la rétine de l'œil et la matrice de micro-miroirs 560. Ainsi, l'image formée au niveau de la matrice de micro-miroir, par le basculement de chaque micro-miroir dans la première ou seconde position, est vue nette par l'utilisateur. Dit autrement, le système optique de projection 590 participe à la projection, sur l'œil de l'utilisateur, d'une image formée au niveau de la matrice de micro-miroirs 560. Sur la figure 5, des flèches en trait épais symbolisent la conjugaison optique entre une surface passant par la rétine de l'œil et la surface de mise au point 591, et la conjugaison optique entre la surface de mise au point 591 et la matrice de micro-miroirs 560.

Le système optique de projection 590 est avantageusement un système optique à focale variable, afin de pouvoir être ajusté à l'œil de l'utilisateur. L'ajustement de la longueur focale peut être manuel, basé sur le ressenti de l'utilisateur qui recherche la focale pour laquelle il voit une image la plus nette possible. En variante, l'ajustement de la longueur focale peut être automatique. L'ajustement automatique est basé sur une image obtenue avec module de photo-détection 550, pour obtenir une image projetée la plus nette possible.

La figure 6A illustre un système 600 selon un quatrième mode de réalisation de l'invention, qui ne sera décrit que pour ses différences relativement au mode de réalisation de la figure 5. Le système 600 se distingue du mode de réalisation de la figure 5 en ce qu'il comporte en outre un système optique de réglage 695, qui s'étend entre la matrice de micro-miroirs 660 et le module de photo-détection. Le système optique de réglage 695 est constitué d'une ou plusieurs lentilles. Il est configuré pour pouvoir participer, conjointement avec le système optique de projection 690, le système optique formé par les éléments de l'œil entre la rétine et la cornée, et le cas échéant une optique de correction de la vue telle qu'une lentille de contact, et via la matrice de micro-miroirs 660, à la conjugaison optique entre une surface passant par la rétine de l'œil et une surface de détection du module de photo-détection 650. Le système optique de réglage 695 peut avantageusement être un système optique à focale variable.

Comme dans le précédent mode de réalisation, le système de projection 690 est ici un système optique à focale variable, ajustable manuellement pour projeter vers l'œil de l'utilisateur une image qui sera vue nette par ce dernier. Le système optique de réglage 695 est ajusté quant à lui pour obtenir une image nette de la rétine de l'œil, ce qui peut être réalisé avec un système autofocus pilotant une ou plusieurs lentilles du système optique de réglage 695, sans toucher au réglage du système de projection 690.

Une surface passant par la rétine de l'œil 10 est optiquement conjuguée avec la surface de mise au point 691. Grâce au système optique de projection 690, la surface de mise au point 691 est optiquement conjuguée avec la matrice de micro-miroirs 660. Par conséquent, lorsque ladite surface passant par l'œil désigne une surface passant par la rétine, le système optique de réglage 695 est configuré pour réaliser la conjugaison optique entre la matrice de micro-miroirs 660 et la surface de détection du module de photo-détection 650. La surface de détection du module de photo-détection désigne une surface orthogonale à l'axe optique 651 de ce dernier, selon laquelle s'étend l'au moins un photo-détecteur du module de photo-détection. Là encore, des flèches en trait épais symbolisent la conjugaison optique entre une surface passant par la rétine de l'œil et la surface de mise au point 691, et, la conjugaison optique entre la surface passant par la rétine de l'œil et la surface de détection du module de photo-détection.

Comme dans le précédent mode de réalisation, la surface de mise au point 691 est optiquement conjuguée avec la matrice de micro-miroirs 660, de sorte que les images formées à l'aide du premier module d'émission et de la matrice de micro-miroirs sont vues nettes par l'utilisateur. En outre, une surface passant par la rétine de l'œil est optiquement conjuguée avec la surface de détection du module de photo-détection 650. Ainsi, le module de photo-détection 650 peut acquérir une image nette de la rétine de l'œil, sans modification des réglages du système 600 lors du passage d'une configuration d'acquisition d'une image de la rétine à une configuration de projection d'image vers l'œil de l'utilisateur (et inversement).

La figure 6B illustre un système 600' selon une variante de ce quatrième mode de réalisation de l'invention. Cette variante permet de remplacer le réglage manuel du système optique de projection 690 par un réglage automatique. Ceci est particulièrement utile lors d'un changement d'utilisateur, nécessitant un ajustement de la focale du système optique de projection 690 par exemple parce que l'œil du second utilisateur ne se situe pas morphologiquement exactement au même endroit par rapport au système de vision. L'ajustement automatique présente également un grand intérêt pour refaire le réglage, en cours d'utilisation par un utilisateur donné, par exemple parce que le système de vision a bougé ou encore parce que la distance focale du système optique formé par les éléments de l'œil entre la rétine et la cornée change légèrement lorsque l'œil de l'utilisateur tourne (car l'œil n'est pas parfaitement sphérique ou que l'utilisateur force l'accommodation ce qui provoque une situation d'inconfort optique).

Dans la variante de la figure 6B, l'optique de réglage 695, une fois initialement ajustée, est conçue de manière à obtenir une image nette de la rétine de l'utilisateur même si la focale du système de projection 690 est modifiée d'une longueur raisonnable, inférieure à cinq centimètres (par exemple sur quelques millimètres ou deux centimètres, voire cinq centimètres). Pour cela, l'optique de réglage 695 présente une grande profondeur de champ. De cette manière, on maintient la conjugaison optique entre la surface passant par la rétine l'œil et la surface de détection du module de photo-détection 650, même en cas de légère modification de la focale du système de projection 690. Ainsi, lorsque l'image est nette pour l'utilisateur, l'image de la rétine obtenue sur le module de photo-détection 650 est également nette, et réciproquement.

Dans la variante de la figure 6B, le système optique de projection 690 est un système optique à focale variable, relié à un premier dispositif de pilotage 693. Le système optique à focale variable peut être une lentille liquide, dont la courbure peut être modifiée par l'application d'une tension électrique. En variante, le système optique à focale variable peut être constitué de plusieurs lentilles, et sa longueur focale peut être modifiée via un ajustement des positions relatives desdites lentilles. Le premier dispositif de pilotage 693 peut comprendre des moyens électroniques et des moyens informatiques et/ou logiciels. Il s'agit typiquement d'un circuit électronique numérique ou analogique, de préférence dédié, associé à un microprocesseur et/ou un ordinateur. Il est relié au système optique de projection 690, et apte à ajuster sa focale à une valeur de consigne.

Dans l'exemple illustré à la figure 6B, le système comporte en outre un calculateur 656, configuré pour recevoir en entrée au moins une image acquise par le module de photo-détection 650, et pour mettre en œuvre un traitement de cette image de manière à déterminer un indice de netteté de cette dernière. A partir de l'indice de netteté, le calculateur 656 est configuré pour déterminer une commande d'ajustement de focale et transmettre cette dernière au premier dispositif de pilotage 693. La commande d'ajustement de focale est déterminée de manière à augmenter la netteté de l'image acquise par le module de photo-détection 650. On peut ainsi mettre en œuvre un procédé d'autofocus, ou réglage automatique de la longueur focale du système optique de projection 690. L'ajustement peut être déterminé à partir d'images de zones spécifiques de la rétine, par exemple des images de la fovéa, en identifiant cette dernière à l'aide du calculateur 656. Selon une autre variante, l'ajustement peut être déterminé à partir d'une image large de la rétine, et en effectuant une moyenne sur diverses zones de cette image.

Le réglage du système optique de réglage 695 peut être initialement réalisé en usine, sans œil humain, en remplaçant la rétine de l'œil par un support de projection tel qu'un écran blanc. La focale du système de projection 690 est alors ajustée pour obtenir une image projetée qui soit nette sur le support de projection. L'image projetée est par exemple l'image d'une mire. Le support de projection est avantageusement observé par une caméra, pour la recherche de la netteté maximale de l'image projetée. Cette même mire sert ensuite à régler le système optique de réglage 695, de manière à ce que l'image de cette dernière, projetée sur le support de projection et capturée par le module de photo-détection 650, soit nette. De cette manière, on a simultanément l'image projetée de la mire qui est nette sur le support de projection, et l'image acquise par le module de photo-détection 650 qui est nette.

Dans une variante non représentée, le système optique de réglage 695 est un système optique à focale variable, relié à un second dispositif de pilotage. Le second dispositif de pilotage est relié au système optique de réglage pour ajuster sa focale à une valeur de consigne. Le second dispositif de pilotage peut être relié à un calculateur, configuré pour recevoir une image acquise par le module de photo-détection, calculer un indice de netteté de cette image et en déduire une commande d'ajustement de focale à transmettre au second dispositif de pilotage. La commande d'ajustement de focale est déterminée de manière à maximiser l'indice de netteté. On peut ainsi ajuster automatiquement la longueur focale du système optique de réglage 695, de manière à ce que ce dernier participe à une conjugaison optique entre une surface passant par l'œil et la surface de détection du module de photo-détection 650. Le second dispositif de pilotage est avantageusement utilisé après un réglage manuel de la netteté de l'image vue par un utilisateur.

Selon une variante non représentée, le second dispositif de pilotage est apte à ajuster la longueur focale du système optique de réglage 695, pour que ce dernier participe à la conjugaison optique entre une surface passant par l'iris de l'œil et la surface de détection du module de photo-détection 650. L'image de l'iris peut être transmise par un calculateur, et analysée de manière à déterminer un identifiant de l'utilisateur. Avantageusement, le second dispositif de pilotage est apte à alterner entre une position dans laquelle il acquiert une image de l'iris, pour l'identification de l'utilisateur, et une position dans laquelle il acquiert une image de la rétine.

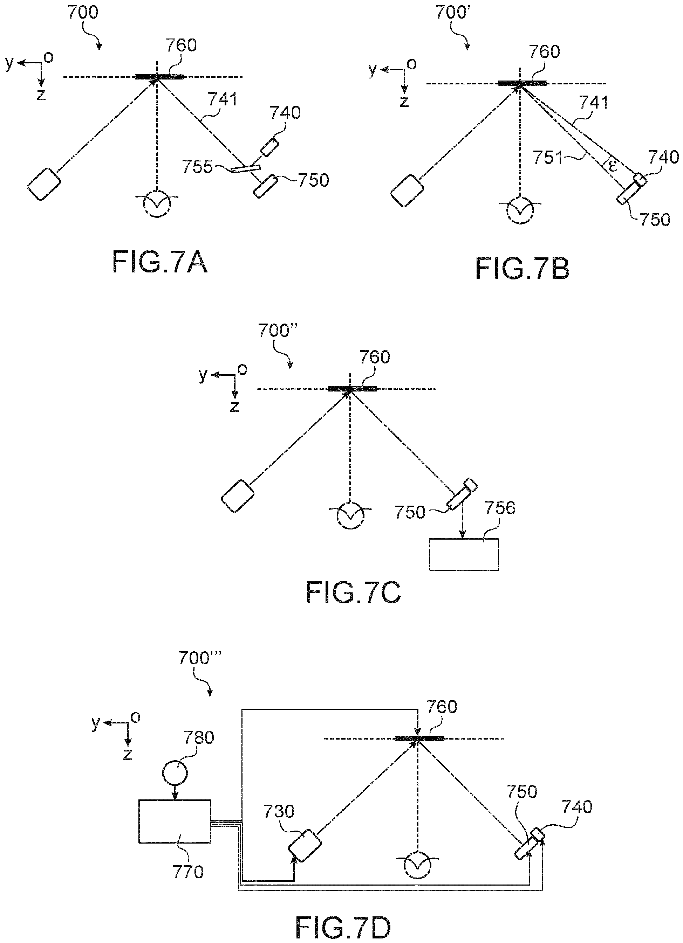

Les figures 7A à 7C illustrent différentes variantes de l'invention, pouvant être combinées ensemble et/ou combinées avec l'un ou l'autre des modes de réalisation décrits ci-avants.

Dans la variante 700 de la figure 7A, un miroir partiellement réfléchissant 755 est positionné sur l'axe optique du module de photo-détection 750, entre le module de photo-détection 750 et la matrice de micro-miroirs 760. Le miroir partiellement réfléchissant 755 est configuré ici pour dévier le second axe d'émission associé au second module d'émission 740, de manière à superposer ce second axe d'émission 741 avec l'axe optique du module de photo-détection 750. Une partie de la lumière émise est perdue, ce qui peut être aisément compensée par une plus forte intensité lumineuse à l'émission, au niveau du second module d'émission 740. Dans une variante non représentée, les positions du module de photo-détection et du second module d'émission sont échangées.

Dans la variante 700' de la figure 7B, l'axe optique 751 du module de photo-détection 750 et le second axe d'émission 741 du second module d'émission sont inclinés l'un par rapport à l'autre, selon un petit angle ε compris entre 2° et 10°.

Dans la variante 700" de la figure 7C, le module de photo-détection 750 est relié à un calculateur 756, ou processeur, de manière filaire ou non filaire. Le calculateur 756 est configuré pour recevoir en entrée au moins une image acquise par le module de photo-détection, et pour mettre en œuvre un traitement de cette image de manière à en déduire un ou plusieurs paramètres relatifs à l'utilisateur, par exemple un identifiant de l'utilisateur ou des données relatives la direction du regard ou des données relatives à un mouvement de l'œil de l'utilisateur (variation de la direction du regard).

Enfin, la figure 7D illustre une variante 700‴ incluant un dispositif de pilotage 770, pour le pilotage du premier module d'émission 730, du second module d'émission 740, du module de photo-détection 750, et de la matrice de micro-miroirs 760. Le dispositif de pilotage 770 peut être nommé « troisième dispositif de pilotage », pour le distinguer des premier et deuxième dispositifs de pilotage mentionnés ci-avant. Le dispositif de pilotage 770 peut comprendre des moyens électroniques et des moyens informatiques et/ou logiciels. Il s'agit typiquement d'un circuit électronique numérique ou analogique, de préférence dédié, associé à un microprocesseur et/ou un ordinateur. Le dispositif de pilotage 770 est relié au premier module d'émission 730, par liaison filaire ou non filaire, et apte à envoyer à ce dernier des consignes d'allumage et d'extinction. Le dispositif de pilotage 770 est relié en outre au second module d'émission 740, par liaison filaire ou non filaire, et apte à envoyer à ce dernier des consignes d'allumage et d'extinction. Le dispositif de pilotage 770 est relié en outre à la matrice de micro-lentilles 760, par liaison filaire ou non filaire, et apte à envoyer à cette dernière des consignes de positionnement des micro-miroirs, chacun dans l'une ou l'autre parmi la première ou la seconde position. Ici, mais de manière non limitative, le dispositif de pilotage 770 est relié enfin au module de photo-détection 750, par liaison filaire ou non filaire, et apte à envoyer à ce dernier des consignes relatives à des instants de démarrage et d'arrêt d'une intégration de signal lumineux par l'au moins un photo-détecteur du module de photo-détection.

Le dispositif de pilotage 770 est relié ici à un processeur 780, lequel fourni notamment des données d'images virtuelles à projeter à l'utilisateur. Le dispositif de pilotage 770 est apte à transformer ces données d'images virtuelles en consignes de pilotage du premier module d'émission et de la matrice de micro-lentilles. Le cas échéant, le processeur externe 780 peut fournir également des requêtes d'images de l'œil. Le dispositif de pilotage 770 est alors apte à transformer ces requêtes d'images de l'œil en consignes de pilotage du second module d'émission, de la matrice de micro-lentilles et du module de photo-détection. On peut ainsi définir des instants d'acquisition d'images de l'œil, par exemple dans le cadre d'un suivi des mouvements de l'œil.

Selon une autre variante non représentée, le système selon l'invention comporte en outre un calculateur tel que décrit en référence à la figure 7C, configuré pour recevoir en entrée au moins une image acquise par le module de photo-détection, et pour mettre en œuvre un traitement de cette image de manière à en déduire des données relatives à une direction du regard ou à un mouvement de l'œil de l'utilisateur. Ces données peuvent être transmises au dispositif de pilotage 770, pour adapter une commande d'affichage d'images virtuelles en fonction de la direction du regard ou du mouvement de l'œil. On peut ainsi optimiser un rendu de la réalité virtuelle. En complément ou en variante, des données relatives au mouvement de l'œil constituent un mot de passe, qui est analysé au niveau du dispositif de pilotage 770 pour libérer ou non un accès à des données supplémentaires.

Un système complet peut comporter deux systèmes selon l'invention tels que décrits ci-dessus, chacun dédié à un œil respectif de l'utilisateur. En variante, un système complet comporte un seul système selon l'invention tel que décrit ci-dessus, dédié à l'un des deux yeux, tandis que la projection d'images vers le deuxième œil n'est pas couplée à la possibilité d'imager ce second œil (on perd alors la possibilité d'avoir un autofocus sur cet œil, ce qui réduit le confort d'utilisation puisque l'autofocus est remplacé par un ajustement manuel de la focale du système optique de projection associé au second œil).

On a décrit dans les exemples différents modes de réalisation d'un système de vision en réalité virtuelle selon l'invention. Selon d'autres modes de réalisation, non représentés, le système de vision selon l'invention forme un système de vision en réalité augmentée. L'homme du métier saura aisément adapter les exemples décrits au cas d'un système de vision en réalité augmentée, par exemple en ajoutant un guide d'onde planaire pour déporter la matrice de micro-miroirs hors du champ de vision de l'œil et laisser passer la lumière provenant d'une scène extérieure.

Selon d'autres variantes encore, le système optique selon l'invention ne comporte pas de second module d'émission, et le module de photo-détection est sensible dans le visible. Une image de l'œil peut être acquise par le module de photo-détection, simultanément à l'envoi de lumière par le premier module d'émission. Le cas échéant, on peut soustraire à l'image acquise l'image pixellisée projetée vers l'œil.

Selon d'autres variantes encore, le premier module d'émission comporte une unique source lumineuse, polychromatique, associée à une roue de coloration pour émettre à faisceau lumineux dont le spectre est centré tour à tour sur différentes valeurs de la longueur d'onde.

On décrit dans la suite différents procédés d'utilisation d'un système selon l'invention, dans lequel le premier module d'émission comporte trois sources élémentaires émettant respectivement dans le rouge, le bleu et le vert. De tels procédés sont avantageusement mis en œuvre par un dispositif de pilotage tel qu'illustré en figure 7D.

Un premier procédé comporte les étapes suivantes :

> a) allumage de l'une première desdites sources élémentaires, et pilotage des miroirs de la matrice de micro-miroir de manière à former l'une première composante d'une image en couleurs ;
> b) extinction de la première desdites sources élémentaires, allumage de l'une seconde desdites sources élémentaires, et pilotage des miroirs de la matrice de micro-miroir de manière à former l'une seconde composante de l'image en couleurs ;
> c) extinction de la seconde desdites sources élémentaires, allumage de l'une troisième desdites sources élémentaires, et pilotage des miroirs de la matrice de micro-miroir de manière à former l'une troisième composante de l'image en couleurs ; et
> d) extinction de la troisième desdites sources élémentaires, allumage du second module d'émission, pilotage de la matrice de micro-miroirs pour que l'un au moins des micro-miroirs se trouve dans la seconde position, et acquisition par le module de photo-détection d'une image infrarouge d'une région d'un œil de l'utilisateur.

De préférence, à l'étape d), tous les micro-miroirs de la matrice de micro-miroir sont positionnés dans leur seconde position, de manière à réaliser un éclairage uniforme de l'œil, dans l'infrarouge.

En variante, le module de photo-détection ne comporte qu'un unique photo-détecteur. Dans ce cas, il est possible, de façon connue, d'acquérir une image de l'œil en éclairant l'œil successivement par différents motifs d'éclairage prédéterminés. L'homme du métier devra néanmoins adapter les procédés connus, pour prendre en compte le fait que l'éclairage de l'œil dans l'infrarouge est réalisé à l'aide des micro-miroirs dans leur seconde position, où cette seconde position correspond à des pixels éteints sur les images destinées à être vues par l'utilisateur.

Dans une variante du procédé ci-dessus, le second module d'émission lumineuse est allumé en permanence. A chaque fois que la matrice de micro-miroirs dévie vers l'œil de la lumière visible, sous la forme d'une première image pixellisée, elle dévie ainsi également vers l'œil de la lumière infrarouge, sous la forme d'une seconde image pixellisée complémentaire de la première image pixellisée. En moyenne, sur une durée suffisamment longue, la somme des différentes secondes images pixellisées projetées vers l'œil réalise un éclairage sensiblement uniforme. Dans ce procédé, l'acquisition d'une image de l'œil à l'aide du module de photo-détection est donc réalisée sur un temps long, simultanément à la projection d'images visibles vers l'œil. En particulier, l'intégration de signal lumineux, par l'au moins un photo-détecteur du module de photo-détection, dure pendant toute la durée au moins d'un cycle constitué par les étapes a) à c) mentionnées ci-dessus. En variante, cette intégration de signal dure pendant toute la durée de plusieurs cycles, où chaque cycle est constitué par les étapes a) à c) mentionnées ci-dessus et se rapporte à une image en couleurs distinctes. L'intégration sur un temps long permet de réaliser l'éclairage infrarouge avec une intensité lumineuse réduite. Il n'est pas nécessaire, en outre, d'ajuster des règles de pilotage du premier module d'émission et de la matrice de micro-miroirs, en comparaison avec l'art antérieur.

Les procédés décrits ci-dessus sont aisément adaptables au cas dans lequel le premier module d'émission comporte une unique source lumineuse polychromatique associée à une roue de coloration.

## Revendications

1. Système de vision en réalité virtuelle ou en réalité augmentée (200 ; 500 ; 600 ; 600' ; 700 ; 700' ; 700" ; 700"') comportant :

> - un premier module d'émission (230 ; 730), apte à émettre un faisceau de lumière visible orienté selon un premier axe d'émission (231) ;
- un second module d'émission (240 ; 740), apte à émettre un faisceau de lumière infrarouge orienté selon un second axe d'émission (241) ; et
- un module de photo-détection (250 ; 650 ; 750), sensible dans l'infrarouge ;

**caractérisé en ce qu'**il comporte en outre une matrice de micro-miroirs (260 ; 560 ; 660 ; 760), dans laquelle chaque micro-miroir (261) est apte à prendre une première position et une seconde position distinctes l'une de l'autre, avec les micro-miroirs parallèles entre eux lorsqu'ils sont tous dans la première position, respectivement lorsqu'ils sont tous dans la seconde position, et **en ce que** :

- chaque micro-miroir (261) de la matrice de micro-miroirs (260 ; 560 ; 660 ; 760) est configuré pour, dans sa première position, recevoir de la lumière en provenance du premier module d'émission (230 ; 730) et la réfléchir selon un axe parallèle à un axe d'intérêt (201) ; et
- chaque micro-miroir (261) de la matrice de micro-miroirs (260 ; 560 ; 660 ; 760) est configuré pour, dans sa seconde position, recevoir de la lumière en provenance du second module d'émission (240 ; 740) et la réfléchir selon un axe sensiblement parallèle à l'axe d'intérêt (201), et recevoir de la lumière se propageant selon un axe parallèle à l'axe d'intérêt (201) et la réfléchir vers le module de photo-détection (250 ; 650 ; 750).

2. Système (500 ; 600 ; 600' ; 700 ; 700' ; 700" ; 700''') selon la revendication 1, **caractérisé en ce que** pour chacun des micro-miroirs (261) de la matrice de micro-miroirs (260 ; 560 ; 660 ; 760), la première position et la seconde position sont symétriques l'une de l'autre relativement à un plan de symétrie élémentaire (262), avec les plans de symétrie élémentaires associés à chacun des micro-miroirs qui sont tous parallèles entre eux.

3. Système (500 ; 600 ; 600') selon la revendication 1 ou 2, **caractérisé en ce qu'**il comporte en outre un système optique de projection (590 ; 690 ; 790), situé en aval de la matrice de micro-miroirs (560 ; 660 ; 760) selon un sens de propagation du faisceau de lumière visible dans le système de vision en réalité virtuelle ou en réalité augmentée, et apte à réaliser une conjugaison optique entre la matrice de micro-miroirs et une surface de mise au point prédéterminée (591; 691).

4. Système (600') selon la revendication 3, **caractérisé en ce que** le système optique de projection (690) est un système optique à focale variable, relié à un premier dispositif de pilotage (693) pour le pilotage de la longueur focale dudit système optique de projection.

5. Système (600 ; 600') selon la revendication 3 ou 4, **caractérisé en ce qu'**il comporte en outre un système optique de réglage (695), disposé entre la matrice de micro-miroirs (660) et le module de photo-détection (650), et configuré pour participer à une conjugaison optique entre une surface destinée à recevoir l'œil d'un utilisateur et une surface de détection du module de photo-détection (650).

6. Système (600 ; 600') selon la revendication 5, **caractérisé en ce qu'**une profondeur de champ du système optique de réglage (695) est adaptée pour permettre de former, sur la surface de détection du module de photo-détection (650), une image nette d'une surface passant en utilisation par l'œil de l'utilisateur, pour toute valeur de la longueur focale du système optique de projection (690) appartenant à un intervalle déterminé de longueurs focales, avec ledit intervalle de longueurs focale qui présente une étendue comprise entre trois millimètres et cinq centimètres.

7. Système (700') selon l'une quelconque des revendications 1 à 6, **caractérisé en ce qu'**un axe optique (751) du dispositif de photo-détection (750) et le second axe d'émission (741) sont sensiblement parallèles, à plus ou moins 10° près.

8. Système (700) selon l'une quelconque des revendications 1 à 6, **caractérisé en ce qu'**il comporte au moins un miroir partiellement réfléchissant (755), configuré pour dévier un axe optique du dispositif de photo-détection (750) ou le second axe d'émission (741), de manière à superposer ensemble ces derniers.

9. Système (700") selon l'une quelconque des revendications 1 à 8, **caractérisé en ce qu'**il comporte en outre un calculateur (756), configuré pour recevoir en entrée au moins une image infrarouge acquise par le module de photo-détection (750), et pour mettre en œuvre un traitement de cette au moins une image infrarouge de manière à en déduire un ou plusieurs paramètre(s) relatif(s) à l'utilisateur.

10. Système (200 ; 500 ; 600 ; 600' ; 700 ; 700' ; 700" ; 700''') selon l'une quelconque des revendications 1 à 9, **caractérisé**

**en ce que** le premier module d'émission lumineuse (230) est apte à émettre un faisceau de lumière visible, de spectre centré alternativement sur une première, une deuxième et une troisième longueur d'onde

11. Système (200 ; 500 ; 600 ; 600' ; 700 ; 700' ; 700" ; 700''') selon la revendication 10, **caractérisé en ce que** le premier module d'émission lumineuse (230) comporte au moins trois source élémentaires, adaptées respectivement à émettre un faisceau lumineux rouge, bleu et vert.

12. Procédé d'utilisation d'un système (200 ; 500 ; 600 ; 600' ; 700 ; 700' ; 700" ; 700''') selon la revendication 10, le procédé comportant les étapes suivantes :

a) pilotage du premier module d'émission (230), pour l'émission d'un faisceau de lumière visible avec un spectre centré sur la première longueur d'onde, et pilotage des miroirs de la matrice de micro-miroir (260 ; 560 ; 660 ; 760) de manière à former l'une première composante d'une image en couleurs ;
b) pilotage du premier module d'émission (230), pour l'émission d'un faisceau de lumière visible avec un spectre centré sur la deuxième longueur d'onde, et pilotage des miroirs de la matrice de micro-miroir (260 ; 560 ; 660 ; 760) de manière à former l'une seconde composante de l'image en couleurs ;
c) pilotage du premier module d'émission (230), pour l'émission d'un faisceau de lumière visible avec un spectre centré sur la troisième longueur d'onde, et pilotage des miroirs de la matrice de micro-miroir (260 ; 560 ; 660 ; 760) de manière à former l'une troisième composante de l'image en couleurs ; et
d) pilotage du premier module d'émission lumineuse (230) pour arrêter l'émission du faisceau de lumière visible, pilotage du second module d'émission (240 ; 740) pour l'émission d'un faisceau de lumière infrarouge, pilotage de la matrice de micro-miroirs (260 ; 560 ; 660 ; 760) pour que l'un au moins des micro-miroirs se trouve dans la seconde position, et acquisition par le module de photo-détection (250; 650 ; 750) d'une image infrarouge d'une région d'un œil de l'utilisateur.

13. Procédé selon la revendication 12, **caractérisé en ce qu'**à l'étape d), tous les micro-miroirs de la matrice de micro-miroir (260; 560 ; 660 ; 760) sont positionnés dans leur seconde position.

14. Procédé selon la revendication 12, **caractérisé en ce que** le module de photo-détection (250 ; 650; 750) comporte une unique photodiode, et **en ce qu'**à l'étape d), seulement certains des micro-miroirs de la matrice de micro-miroir (260 ; 560 ; 660 ; 760) sont positionnés dans leur seconde position.

15. Procédé d'utilisation d'un système selon la revendication 10, le procédé comportant les étapes suivantes :

a) pilotage du premier module d'émission (230), pour l'émission d'un faisceau de lumière visible avec un spectre centré sur la première longueur d'onde, et pilotage des miroirs de la matrice de micro-miroir (260 ; 560 ; 660 ; 760) de manière à former l'une première composante d'une image en couleurs ;
b) pilotage du premier module d'émission (230), pour l'émission d'un faisceau de lumière visible avec un spectre centré sur la deuxième longueur d'onde, et pilotage des miroirs de la matrice de micro-miroir (260 ; 560 ; 660 ; 760) de manière à former l'une seconde composante de l'image en couleurs ; et
c) pilotage du premier module d'émission (230), pour l'émission d'un faisceau de lumière visible avec un spectre centré sur la troisième longueur d'onde, et pilotage des miroirs de la matrice de micro-miroir (260 ; 560 ; 660 ; 760) de manière à former l'une troisième composante de l'image en couleurs ;

où, durant toute la durée au moins des étapes a) à c), le second module d'émission (240 ; 740) émet de la lumière et le module de photo-détection reçoit de la lumière et intègre un signal.

**Patentansprüche**

1. Visionsystem in virtueller Realität oder in erweiterter Realität (200; 500; 600; 600'; 700; 700'; 700"; 700'''), umfassend:

- ein erstes Sendemodul (230; 730), das in der Lage ist, einen sichtbaren Lichtstrahl auszusenden, der entlang einer ersten Sendeachse (231) ausgerichtet ist;
- ein zweites Sendemodul (240; 740), das in der Lage ist, einen nach einer zweiten Sendeachse (241) ausgerichteten Infrarotlichtstrahl auszusenden; und
- ein Fotoerkennungsmodul (250; 650; 750), empfindlich im Infrarotbereich;

**dadurch gekennzeichnet, dass** es ferner eine Mikrospiegelmatrix (260; 560; 660; 760) aufweist, wobei jeder Mikrospiegel (261) dazu geeignet ist, eine voneinander getrennte erste und zweite Position einzunehmen, wobei die Mikrospiegel parallel zueinander stehen, wenn sie sich alle in der ersten Position befinden, beziehungsweise, wenn sie sich alle in der zweiten Position befinden, und dass:

- jeder Mikrospiegel (261) der Mikrospiegelmatrix (260; 560; 660; 760) so eingerichtet ist, dass er in seiner ersten Position Licht von dem ersten Sendemodul (230; 730) empfängt und es entlang einer Achse parallel zu einer Interessensachse (201) reflektiert; und
- jeder Mikrospiegel (261) der Mikrospiegelmatrix (260; 560; 660; 760) ist so eingerichtet, dass er in seiner zweiten Position Licht vom zweiten Sendemodul (240; 740) empfängt und es entlang einer Achse reflektiert, die im Wesentlichen parallel zur Interessenachse (201) verläuft, und Licht empfängt, das sich entlang einer Achse parallel zur Interessenachse (201) ausbreitet, und es zum Fotoerkennungsmodul (250; 650; 750) reflektiert.

2. System (500; 600; 600'; 700; 700'; 700"; 700''') nach Anspruch 1, **dadurch gekennzeichnet, dass** für jeden der Mikrospiegel (261) der Mikrospiegelmatrix (260; 560; 660; 760) die erste Position und die zweite Position relativ zu einer elementaren Symmetrieebene (262) symmetrisch zueinander sind, wobei die elementaren Symmetrieebenen mit jedem der Mikrospiegel verbunden sind, die alle parallel zueinander sind.

3. System (500; 600; 600') nach Anspruch 1 oder 2, **dadurch gekennzeichnet, dass** es ferner ein optisches Projektionssystem (590; 690; 790) aufweist, das sich nach der Mikrospiegelmatrix (560; 660; 760) in einer Ausbreitungsrichtung des im Visionsystems in virtueller Realität oder in erweiterter Realität sichtbaren Lichtstrahls befindet und geeignet ist, eine optische Konjugation zwischen der Mikrospiegelmatrix und einer vorbestimmten Fokussierfläche (591; 691) herzustellen.

4. System (600') nach Anspruch 3, **dadurch gekennzeichnet, dass** das Projektionsoptiksystem (690) ein optisches System mit variabler Brennweite ist, das mit einer ersten Steuervorrichtung (693) zur Steuerung der Brennweite des Projektionsoptiksystems verbunden ist.

5. System (600; 600') nach Anspruch 3 oder 4, **dadurch gekennzeichnet, dass** es ferner ein optisches Einstellsystem (695) umfasst, das zwischen der Mikrospiegelmatrix (660) und dem Fotoerkennungsmodul (650) angeordnet ist und so eingerichtet ist, dass es an einer optischen Verbindung zwischen einer Oberfläche zur Aufnahme des Auges eines Benutzers und einer Erfassungsfläche des Fotoerkennungsmoduls (650) teilnimmt.

6. System (600; 600') nach Anspruch 5, **dadurch gekennzeichnet, dass** eine Tiefenschärfe des Einstelloptiksystems (695) so angepasst ist, dass es möglich ist, auf der Erfassungsfläche des Fotoerkennungsmoduls (650) ein scharfes Bild einer Oberfläche zu bilden, die durch das Auge des Benutzers in Gebrauch genommen wird, für jeden Wert der Brennweite des Projektionsoptiksystems (690), der zu einem bestimmten Brennweitenbereich gehört, mit einem Brennweitenbereich von drei Millimetern bis fünf Zentimetern.

7. System (700') nach einem der Ansprüche 1 bis 6, **dadurch gekennzeichnet, dass** eine optische Achse (751) der Fotoerkennungsvorrichtung (750) und die zweite Sendeachse (741) im Wesentlichen parallel sind, mit einer Genauigkeit von mehr oder weniger 10°.

8. System (700) nach einem der Ansprüche 1 bis 6, **dadurch gekennzeichnet, dass** es mindestens einen teilweise reflektierenden Spiegel (755) aufweist, der so eingerichtet ist, dass er eine optische Achse der Fotoerkennungsvorrichtung (750) oder die zweite Sendeachse (741) ablenkt, um diese miteinander zu überlagern.

9. System (700") nach einem der Ansprüche 1 bis 8, **dadurch gekennzeichnet, dass** es ferner einen Rechner (756) umfasst, der so eingerichtet ist, dass er am Eingang mindestens ein vom Fotoerkennungsmodul (750) erfasstes Infrarotbild empfängt, und um eine Verarbeitung dieses mindestens einen Infrarotbildes umzusetzen, um daraus einen oder mehrere benutzerbezogene Parameter abzuleiten.

10. System (200; 500; 600; 600'; 700; 700'; 700"; 700''') nach einem der Ansprüche 1 bis 9, **dadurch gekennzeichnet, dass** das erste Lichtsendemodul (230) in der Lage ist, einen sichtbaren Lichtstrahl auszusenden, dessen Spektrum abwechselnd auf einer ersten, zweiten und dritten Wellenlänge zentriert ist

11. System (200; 500; 600; 600'; 700; 700'; 700"; 700''') nach Anspruch 10, **dadurch gekennzeichnet, dass** das erste Lichtsendemodul (230) mindestens drei elementare Quellen aufweist, die jeweils geeignet sind, einen roten, blauen und grünen Lichtstrahl auszustrahlen.

12. Verfahren zur Verwendung eines Systems (200; 500; 600; 600'; 700; 700'; 700"; 700''') nach Anspruch 10, wobei das Verfahren folgende Schritte umfasst:

a) Steuerung des ersten Sendemoduls (230), zum Senden eines sichtbaren Lichtstrahls mit einem auf der ersten Wellenlänge zentrierten Spektrum, und Steuerung der Spiegel der Mikrospiegelmatrix (260; 560; 660; 760), so dass eine erste Komponente eines Farbbildes gebildet wird;

b) Steuerung des ersten Sendemoduls (230), zum Senden eines sichtbaren Lichtstrahls mit einem auf der zweiten Wellenlänge zentrierten Spektrum, und Steuerung der Spiegel der Mikrospiegelmatrix (260; 560; 660; 760), so dass eine zweite Komponente des Farbbilds gebildet wird;

c) Steuern des ersten Sendemoduls (230), zum Senden eines sichtbaren Lichtstrahls mit einem auf der dritten Wellenlänge zentrierten Spektrum, und Steuern der Spiegel der Mikrospiegelmatrix (260; 560; 660; 760), so dass eine dritte Komponente des Farbbilds gebildet wird; und

d) Steuerung des ersten Lichtsendemoduls (230) zum Stoppen der Ausgabe des sichtbaren Lichtstrahls, Steuerung des zweiten Sendemoduls (240; 740) zum Senden eines Infrarotlichtstrahls, Steuerung der Mikrospiegelmatrix (260; 560; 660; 760), damit sich mindestens einer der Mikrospiegel in der zweiten Position befindet, und Erfassung eines Infrarotbilds eines Bereichs eines Auges des Benutzers durch das Fotoerkennungsmodul (250; 650; 750).

13. Verfahren nach Anspruch 12, **dadurch gekennzeichnet, dass** in Schritt d) alle Mikrospiegel der Mikrospiegelmatrix (260; 560; 660; 760) in ihrer zweiten Position positioniert sind.

14. Verfahren nach Anspruch 12, **dadurch gekennzeichnet, dass** das Fotoerkennungsmodul (250; 650; 750) eine einzige Photodiode aufweist, und dass in Schritt d) nur einige der Mikrospiegel der Mikrospiegelmatrix (260; 560; 660; 760) in ihrer zweiten Position positioniert sind.

15. Verfahren zur Verwendung eines Systems nach Anspruch 10, wobei das Verfahren die folgenden Schritte umfasst:

a) Steuerung des ersten Sendemoduls (230), zum Senden eines sichtbaren Lichtstrahls mit einem auf der ersten Wellenlänge zentrierten Spektrum, und Steuerung der Spiegel der Mikrospiegelmatrix (260; 560; 660; 760), so dass eine erste Komponente eines Farbbildes gebildet wird;

b) Steuern des ersten Sendemoduls (230), zum Senden eines sichtbaren Lichtstrahls mit einem auf der zweiten Wellenlänge zentrierten Spektrum, und Steuern der Spiegel der Mikrospiegelmatrix (260; 560; 660; 760), so dass eine zweite Komponente des Farbbilds gebildet wird; und

c) Steuerung des ersten Sendemoduls (230), zum Senden eines sichtbaren Lichtstrahls mit einem auf der dritten Wellenlänge zentrierten Spektrum, und Steuerung der Spiegel der Mikrospiegelmatrix (260; 560; 660; 760), so dass eine dritte Komponente des Farbbildes gebildet wird;

wobei während der gesamten Dauer von mindestens den Schritten a) bis c) das zweite Sendemodul (240; 740) Licht aussendet und das Fotoerkennungsmodul Licht empfängt und ein Signal integriert.

**Claims**

1. A virtual reality or augmented reality vision system (200; 500; 600; 600'; 700; 700'; 700"; 700''') including:

- a first emission module (230; 730), capable of emitting a visible light beam oriented along a first emission axis (231);
- a second emission module (240; 740), capable of emitting an infrared light beam oriented along a second emission axis (241); and
- an infrared-sensitive photo-detection module (250; 650; 750);

**characterised in that** it further includes an array of micro-mirrors (260; 560; 660; 760), wherein each micro-mirror (261) is capable of taking a first position and a second position distinct from each other, with the micro-mirrors parallel to each other when they are all in the first position, respectively when they are all in the second position, and **in that**:

- each micro-mirror (261) of the array of micro-mirrors (260; 560; 660; 760) is configured to, in its first position, receive light from the first emission module (230; 730) and reflect it along an axis parallel to an axis of interest (201); and

- each micro-mirror (261) of the array of micro-mirrors (260; 560; 660; 760) is configured to, in its second position, receive light from the second emission module (240; 740) and reflect it along an axis substantially parallel to the axis of interest (201), and receive light propagating along an axis parallel to the axis of interest (201) and reflect it toward the photo-detection module (250; 650; 750).

2. The system (500; 600; 600'; 700; 700'; 700"; 700''') according to claim 1, **characterised in that** for each of the micro-mirrors (261) of the array of micro-mirrors (260; 560; 660; 760), the first position and the second position are symmetrical to each other relative to an elementary plane of symmetry (262), with the elementary planes of symmetry associated with each of the micro-mirrors being all parallel to each other.

3. The system (500; 600; 600') according to claim 1 or 2, **characterised in that** it further includes an optical projection system (590; 690; 790), located downstream of the array of micro-mirrors (560; 660; 760) along a direction of propagation of the visible light beam in the virtual reality or augmented reality vision system, and capable of performing optical conjugation between the array of micro-mirrors and a predetermined focusing surface (591; 691).

4. The system (600') according to claim 3, **characterised in that** the optical projection system (690) is a variable focus optical system, connected to a first control device (693) for controlling the focal length of said optical projection system.

5. The system (600; 600') according to claim 3 or 4, **characterised in that** it further includes an optical adjustment system (695), disposed between the array of micro-mirrors (660) and the photo-detection module (650), and configured to participate in optical conjugation between a surface for receiving a user's eye and a detection surface of the photo-detection module (650).

6. The system (600; 600') according to claim 5, **characterised in that** a depth of field of the optical adjustment system (695) is adapted to allow forming, on the detection surface of the photo-detection module (650), a sharp image of a surface passing through the user's eye in use, for any value of the focal length of the optical projection system (690) belonging to a determined interval of focal lengths, with said interval of focal lengths having a range of between three millimetres and five centimetres.

7. The system (700') according to any of claims 1 to 6, **characterised in that** an optical axis (751) of the photo-detection device (750) and the second emission axis (741) are substantially parallel, to within 10°.

8. The system (700) according to any of claims 1 to 6, **characterised in that** it includes at least one partially reflective mirror (755), configured to deflect an optical axis of the photo-detection device (750) or the second emission axis (741), so as to superimpose the same together.

9. The system (700") according to any of claims 1 to 8, **characterised in that** it further comprises a calculator (756), configured to receive at least one infrared image acquired by the photodetection module (750) as an input, and to implement processing of this at least one infrared image so as to deduce one or more parameter(s) relating to the user.

10. The system (200; 500; 600; 600'; 700; 700'; 700"; 700''') according to any of claims 1 to 9, **characterised in that** the first light emission module (230) is capable of emitting a visible light beam, having a spectrum alternately centred on a first, second and third wavelength.

11. The system (200; 500; 600; 600'; 700; 700'; 700"; 700''') according to claim 10, **characterised in that** the first light emission module (230) includes at least three elementary sources, adapted to emit a red, blue and green light beam respectively.

12. A method for using a system (200; 500; 600; 600'; 700; 700'; 700"; 700''') according to claim 10, the method including the following steps:

a) controlling the first emission module (230), for emitting a visible light beam with a spectrum centred on the first wavelength, and controlling the mirrors of the array of micro-mirrors (260; 560; 660; 760) so as to form a first component of a colour image;

b) controlling the first emission module (230), for emitting a visible light beam with a spectrum centred on the second wavelength, and controlling the mirrors of the array of micro-mirrors (260; 560; 660; 760) so as to form a second component of the colour image;

c) controlling the first emission module (230), for emitting a visible light beam with a spectrum centred on the third wavelength, and controlling the mirrors of the array of micro-mirrors (260; 560; 660; 760) so as to form a third component of the colour image; and

d) controlling the first light emission module (230) to stop emitting the visible light beam, controlling the second emission module (240; 740) for emitting an infrared light beam, controlling the array of micro-mirrors (260; 560; 660; 760) so that at least one of the micro-mirrors is in the second position, and acquiring by the photo-detection module (250; 650; 750) an infrared image of a region of an eye of the user.

13. The method according to claim 12, **characterised in that** in step d), all the micro-mirrors of the array of micro-mirrors (260; 560; 660; 760) are positioned in their second position.

14. The method according to claim 12, **characterised in that** the photo-detection module (250; 650; 750) comprises a single photodiode, and **in that** in step d), only some of the micro-mirrors of the array of micro-mirrors (260; 560; 660; 760) are positioned in their second position.

15. A method for using a system according to claim 10, the method including the following steps:

a) controlling the first emission module (230), for emitting a visible light beam with a spectrum centred on the first wavelength, and controlling the mirrors of the array of micro-mirrors (260; 560; 660; 760) so as to form a first component of a colour image;

b) controlling the first emission module (230), for emitting a visible light beam with a spectrum centred on the second wavelength, and controlling the mirrors of the array of micro-mirrors (260; 560; 660; 760) so as to form a second component of the colour image; and

c) controlling the first emission module (230), for emitting a visible light beam with a spectrum centred on the third wavelength, and controlling the mirrors of the array of micro-mirrors (260; 560; 660; 760) so as to form a third component of the colour image;

wherein, at least for the entire duration of steps a) to c), the second emission module (240; 740) emits light and the photodetection module receives light and integrates a signal.

FIG.1

FIG.2A

FIG.2B

FIG.2C

FIG.3A

FIG.3B

FIG.4A

FIG.4B

FIG.5

FIG.6A

FIG.6B

FIG.7A

FIG.7B

FIG.7C

FIG.7D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3086399
- US 10698204 B